# EUROPÄISCHE PATENTSCHRIFT

(11) **EP 1 438 498 B1**
(45) Veröffentlichungstag und Bekanntmachung des Hinweises auf die Patenterteilung: **23.02.2005**
(21) Anmeldenummer: 02776679.9
(22) Anmeldetag: 18.09.2002
(51) Int. Cl.: F02M 25/08

(54) **VERFAHREN ZUR ÜBERPRÜFUNG DER FUNKTIONSFÄHIGKEIT EINES TANKENTLÜFTUNGSVENTILS EINER TANKENTLÜFTUNGSANLAGE**
METHOD FOR MONITORING PROPER OPERATION OF AN AIR EVACUATING VALVE OF A TANK AIR EVACUATION SYSTEM
PROCEDE DE SURVEILLANCE DU BON FONCTIONNEMENT D'UNE SOUPAPE D'EVACUATION D'AIR D'UN SYSTEME D'EVACUATION D'AIR DE RESERVOIR

(30) Priorität: 11.10.2001 DE 10150420
(43) Veröffentlichungstag der Anmeldung: 21.07.2004
(73) Patentinhaber: ROBERT BOSCH GMBH, 70442 Stuttgart (DE)
(72) Erfinder: ESTEGHLAL, Gholamabas, 71638 Ludwigsburg (DE); LEDERER, Dieter, 71634 Ludwigsburg (DE)
(86) Internationale Anmeldenummer: PCT/DE2002/003489
(87) Internationale Veröffentlichungsnummer: WO 2003/033901

(56) Entgegenhaltungen:
- EP-A- 1 013 917
- WO-A-91/16216
- DE-A- 4 122 975
- SE-C- 505 088
- PATENT ABSTRACTS OF JAPAN vol. 1997, no. 5, 30. Mai 1997 (1997-05-30) -& JP 09 021359 A (FUJI HEAVY), 21. Januar 1997 (1997-01-21)

## Beschreibung

### Hintergrund der Erfindung

Die Erfindung betrifft ein Verfahren zur Überprüfung der Funktionsfähigkeit eines Tankentlüftungsventils einer Tankentlüftungsanlage eines Kraftfahrzeugs.

Das Tankentlüftungsventil einer Tankentlüftungsanlage eines Kraftfahrzeugs muß als abgasbeeinflussende Komponente im Rahmen der On-Board-Diagnose (OBD) auf seine Funktionsfähigkeit hin überprüft werden. Aus der DE 41 22 975 A1 geht ein Verfahren zum Feststellen der Funktionsfähigkeit einer Tankentlüftungsanlage hervor, bei der die Signale für den Volumenstrom für das Tankentlüftungsventil und die Signale für die Druckdifferenz zwischen dem Tankinneren und dem Umgebungsdruck einer Kreuzkovarianzanalyse unterzogen werden. Dabei werden die genannten Signale vor Bildung der Kreuzkovarianzfunktion durch einen Hochpaß geformt und es wird das Maximum oder der Mittelwert der Kreuzkovarianzfunktion, betreffend das Produkt der beiden Eingangsgrößen gebildet. Für das Signal des Volumenstroms durch das Tankentlüftungsventil wird ein Varianzmaß gebildet und aus varianzmaß und Mittelwert oder Maximum wird ein Übertragungsbeiwert berechnet. Wenn der Übertragungsbereich in einem vorgegebenen Bereich liegt, wird die Tankentlüftungsanlage als funktionsfähig angesehen. Ein Vorteil dieses Verfahrens liegt in seiner Unabhängigkeit von Tankdruckänderungen, die nicht durch Volumenstromänderungen durch das Tankentlüftungsventil verursacht werden. Dabei handelt es sich insbesondere um Änderungen, die durch plötzliche Gasentwicklung im Tank verursacht werden, wie sie beispielsweise durch schwappenden Kraftstoff hervorgerufen werden können.

Bekannt ist es auch, die Überprüfung des Tankentlüftungsventils dadurch durchzuführen, daß das Tankentlüftungsventil in einem hinreichend stabilen Arbeitspunkt im Leerlauf aufgesteuert wird, wobei gleichzeitig die Änderung der Gemischzusammensetzung und die Änderung des Energiestroms über die Drosselklappe, der das Produkt aus dem Luftmassenstrom über die Drosselklappe und dem Zündwinkelwirkungsgrad darstellt, beobachtet wird. In Abhängigkeit von dieser Beobachtung wird auf ein funktionsfähiges Tankentlüftungsventil geschlossen. Problematisch hierbei ist, daß die Überprüfung vom Fahrer des Fahrzeugs störend, z.B. in einer Drehzahländerung, wahrgenommen werden kann.

Aus der EP 1 013 917 A ist ein Verfahren nach dem Oberbegriff des Anspruchs 1 bekannt.

Aufgabe der Erfindung ist es, ein Verfahren zur Überprüfung der Funktionsfähigkeit eines Tankentlüftungsventils der eingangs beschriebenen Art dahingehend weiterzubilden, daß der Vorgang der Überprüfung von dem Fahrer eines Fahrzeugs nicht wahrgenommen wird und daß die Überprüfung insbesondere auch außerhalb des Leerlaufs vorgenommen werden kann.

### Zusammenfassung der Erfindung

Zur Lösung dieser Aufgabe wird das erfindungsgemäße Verfahren zur Überprüfung der Funktionsfähigkeit einer Tankentlüftungsanlage eines Kraftfahrzeugs nach Anspruch 1 eingesetzt.

Durch die gepulste Ansteuerung des Tankentlüftungsventils besteht ein sehr geringes Störpotential, das vom Fahrer praktisch nicht wahrgenommen wird. Darüber hinaus ist eine Überprüfung des Tankentlüftungsventils anders als bei bekannten Verfahren zur Überprüfung der Funktionsfähigkeit des Tankentlüftungsventils auch außerhalb des Leerlaufs möglich.

Zum Vergleichen des gemessenen und modellierten Saugrohrdrucks wird vorteilhafterweise eine Frequenzanalyse des gemessenen und modellierten Saugrohrdrucks durchgeführt.

Vorzugsweise erfolgt die gepulste Ansteuerung mit vorgebbaren Werten der Frequenz und des Tastverhältnisses mit kurzen Öffnungszeiten.

Der Arbeitspunkt wird dabei so gewählt, daß er innerhalb vorgebbarer Grenzen stabil ist. Der Arbeitspunkt kann dabei sowohl innerhalb als auch außerhalb des Leerlaufs liegen.

Bei der Erfindung werden die Verfahrensschritte während einer Ansteuerung des Tankentlüftungsventils bei einer aktiven Tankentlüftung durchgeführt. Die Tankentlüftung dient der Desorbtion von vorher im Aktivkohlefilter adsorbierten Kohlenwasserstoff und muß aufgrund der begrenzten Speicherkapazität des Aktivkohlefilters regelmäßig erfolgen. Die Tankentlüftung ist während der überwiegenden Zeit des Motorbetriebs aktiv. Die Nutzung von Phasen aktiver Tankentlüftung ist insofern vorteilhaft als dadurch keine zusätzliche Zeit während des Motorbetriebs für die Diagnose des Tankentlüftungsventils aufzuwenden ist und somit mehr Zeit für andere Diagnosefunktionen zur Verfügung steht.

### Zeichnung

Weitere Vorteile und Merkmale der Erfindung sind Gegenstand der nachfolgenden Beschreibung sowie der zeichnerischen Darstellung eines Ausführungsbeispiels der Erfindung. In der Zeichnung zeigen:
- Fig. 1: eine schematische Darstellung einer Tankentlüftungsanlage mit einer Vorrichtung zur Überprüfung der Funktionsfähigkeit des Tankentlüftungsventils und
- Fig. 2: schematisch ein Blockfunktionsdiagramm für die in Fig. 1 enthaltene Vorrichtung zur Überprüfung der Funktionsfähigkeit des Tankentlüftungsventils.

### Beschreibung von Ausführungsbeispielen

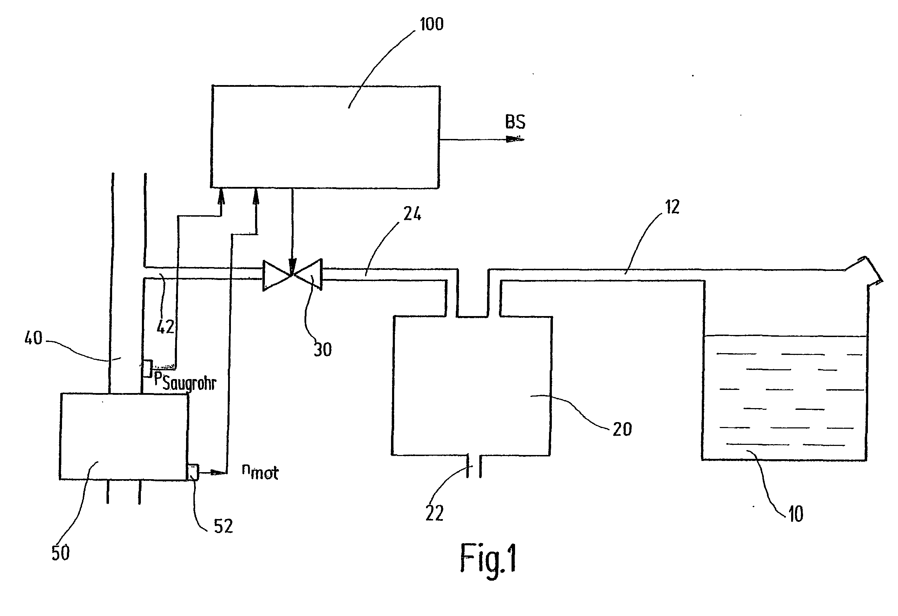

Eine Tankentlüftungsanlage, dargestellt in Fig. 1, umfaßt einen Tank 10, ein Adsorptionsfilter 20, beispielsweise ein Aktivkohlefilter, das mit dem Tank 10 über eine Tankanschlußleitung 12 verbunden ist und eine mit der Umgebung verbindbare Belüftungsleitung 22 aufweist, sowie ein Tankentlüftungsventil (TEV) 30, das einerseits mit dem Adsorptionsfilter 20 über eine Ventilleitung 24 und andererseits mit einem Saugrohr 40 einer Brennkraftmaschine 50 über eine Ventilleitung 42 verbunden ist.

Durch Verdunstung entstehen in dem Tank 10 Kohlenwasserstoffe, die sich in dem Adsorptionsfilter 20 anlagern. Zur Regenerierung des Adsorptionsfilters 20 wird das Tankentlüftungsventil 30 geöffnet, so daß aufgrund des in dem Saugrohr 40 herrschenden Unterdrucks Luft der Atmosphäre durch das Adsorptionsfilter 20 gesaugt wird, wodurch die in dem Adsorptionsfilter 20 angelagerten Kohlenwasserstoffe in das Saugrohr 40 gesaugt und der Brennkraftmaschine 50 zugeführt werden.

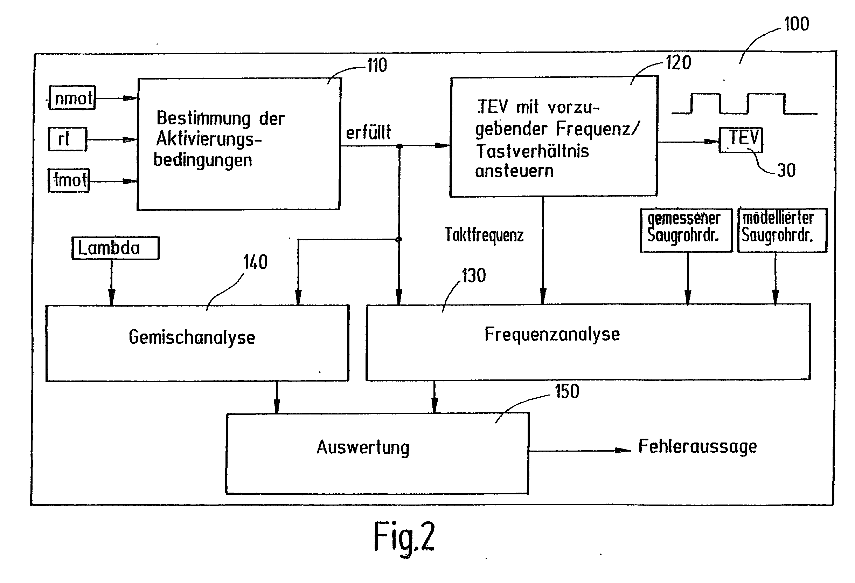

Zur Überprüfung der Funktionsfähigkeit des Tankentlüftungsventils 30 ist eine Vorrichtung 100 vorgesehen, die in Verbindung mit Fig. 2 im folgenden näher beschrieben wird.

Die Vorrichtung 100 umfaßt ein erstes Mittel 110 zur Bestimmung der Aktivierungsbedingungen in Abhängigkeit von der Drehzahl der Brennkraftmaschine nₘₒₜ, die durch einen Sensor 52 erfaßt wird, von dem Lastsignal rl sowie weiteren Größen, wie zum Beispiel der Motortemperatur tₘₒₜ.

Sobald die Aktivierungsbedingungen erfüllt sind, wird das Tankentlüftungsventil 30 durch ein Ansteuermittel 120 mit einer vorzugebenden Frequenz und einem vorzugebenden Tastverhältnis gepulst angesteuert. Dabei wird der Saugrohrdruck sowohl gemessen als auch modelliert. Sodann wird in einem Analysemittel 130 eine Frequenzanalyse sowohl des gemessenen Saugrohrdrucks als auch des modellierten Saugrohrdrucks vorgenommen, wobei die Frequenzanalyse in Abhängigkeit von der Taktfrequenz, mit der das Tankentlüftungsventil 30 angesteuert wurde, durchgeführt wird.

In einem weiteren Analysemittel 140 wird eine Gemischanalyse in Abhängigkeit von dem Lambda-Wert durchgeführt. In einem Auswerteschaltungsteil 150 wird dann die Frequenzanalyse des gemessenen Saugrohrdrucks mit der Frequenzanalyse des modellierten Saugrohrdrucks unter Berücksichtigung der durchgeführten Gemischanalyse verglichen. Bei einer hinreichenden Korrelation der beiden Größen innerhalb vorgebbarer Schranken wird darauf geschlossen, daß das Tankentlüftungsventil 30 ordnungsgemäß funktioniert. In diesem Falle wird beispielsweise ein Beurteilungssignal BS Eins ausgegeben. Existiert keine Korrelation, wird ein Beurteilungssignal Null ausgegeben, was darauf schließen läßt, daß das Tankentlüftungsventil 30 nicht ordnungsgemäß arbeitet.

Das vorbeschriebene Verfahren kann außerhalb des Leerlaufs erfolgen. Es muß lediglich in einem hinreichend stabilen Arbeitspunkt durchgeführt werden. Da das Verfahren nicht wie bei bekannten Verfahren zur Prüfung der Funktionsfähigkeit des Tankentlüftungsventils sukzessive eine Ansteuerung des Tankentlüftungsventils über einen vergleichsweise langen Zeitraum hinweg bis zu dessen voller Öffnung erfordert, sondern eine gepulste Ansteuerung mit kurzen Öffnungszeiten verwendet wird, besteht nur ein geringes Störpotential, das vom Fahrer wahrgenommen werden kann, beispielsweise in einer Änderung der Drehzahl.

Die gepulste Ansteuerung erfolgt mit vorgebbaren Werten der Frequenz- und des Tastverhältnisses mit kurzen Öffnungszeiten. Auf diese Weise kann eine Teilöffnung des Tankentlüftungsventils simuliert werden. Die Durchführung des Verfahrens erfolgt während einer ohnehin erfolgenden Ansteuerung des Tankentlüftungsventils 30 bei einer aktiven Tankentlüftung.

## Patentansprüche

1. Verfahren zur Überprüfung der Funktionsfähigkeit eines Tankentlüftungsventils (30) einer Tankentlüftungsanlage eines Kraftfahrzeugs mit folgenden Schritten:
- das Tankentlüftungsventil (30) wird in einem vorgebbaren Arbeitspunkt gepulst angesteuert;
- dabei wird der Saugrohrdruck (p_{Saugrohr}) gemessen und modelliert;
- es wird der gemessene Saugrohrdruck (p_{Saugrohr}) mit dem modellierten Saugrohrdruck verglichen und bei Korrelation innerhalb vorgegebener Grenzen auf ein funktionsfähiges Tankentlüftungsventil (30) geschlossen, andernfalls auf ein defektes Tankentlüftungsventil geschlossen,
**dadurch gekennzeichnet, daß** vorstehende Schritte während einer Ansteuerung des Tankentlüftungsventils (30) zur aktiven Tankentlüftung durchgeführt werden.

2. Verfahren nach Anspruch 1, **dadurch gekennzeichnet, daß** eine Frequenzanalyse der gemessenen und modellierten Saugrohrdrucke (p_{Saugrohr}) durchgeführt wird.

3. Verfahren nach Anspruch 1 oder 2, **dadurch gekennzeichnet, daß** die gepulste Ansteuerung des Tankentlüftungsventils (30) mit vorgebbaren Werten der Frequenz und des Tastverhältnisses mit kurzen Öffnungszeiten erfolgt.

4. Verfahren nach einem der Ansprüche 1 bis 3, **dadurch gekennzeichnet, daß** der vorgebbare Arbeitspunkt so gewählt ist, daß er innerhalb vorgebbarer Grenzen stabil ist.

## Claims

1. Method of checking the functional capability of a fuel tank venting valve (30) of a fuel tank venting system of a motor vehicle having the following steps:
- the fuel tank venting valve (30) is actuated in a pulsed fashion at a predefinable working time;
- the intake manifold pressure (p_{Saugrohr}) is measured and modelled in the process;
- the measured intake manifold pressure (p_{Saugrohr}) is compared with the modelled intake manifold pressure and when there is a correlation within predefined limits it is concluded that the fuel tank venting valve (30) is functionally capable, and otherwise it is concluded that the fuel tank venting valve is defective,
**characterized in that** the steps above are carried out in order to perform active fuel tank venting while the fuel tank venting valve (30) is being actuated.

2. Method according to Claim 1, **characterized in that** a frequency analysis of the measured and modelled intake manifold pressures (p_{Saugrohr}) is carried out.

3. Method according to Claim 1 or 2, **characterized in that** the pulsed actuation of the fuel tank venting valve (30) is carried out with predefinable values of the frequency and of the pulse duty factor with short opening times.

4. Method according to one of Claims 1 to 3, **characterized in that** the predefinable working time is selected such that it is stable within predefinable limits.

## Revendications

1. Procédé de surveillance du bon fonctionnement d'une soupape d'évacuation d'air de réservoir (30) d'un système d'évacuation d'air de réservoir d'un véhicule automobile comprenant les étapes suivantes :
- la soupape d'évacuation d'air de réservoir (30) est excitée de manière pulsée dans un point de fonctionnement pouvant être prédéfini ;
- la pression du collecteur d'admission (P_{collecteur d'admission}) est ici mesurée et formée ;
- la pression mesurée du collecteur d'admission (P_{collecteur d'admission}) est comparée à la pression formée du collecteur d'admission et en cas de corrélation dans une fourchette de limites données, on conclut au bon fonctionnement de la soupape d'évacuation d'air de réservoir (30) ou dans le cas contraire, on conclut à une défaillance de la soupape d'évacuation d'air de réservoir,
**caractérisé en ce que**
les étapes précédentes sont réalisées pendant une excitation de la soupape d'évacuation d'air de réservoir (30) afin d'évacuer activement l'air du réservoir.

2. Procédé selon la revendication 1,
**caractérisé en ce qu'**
une analyse de fréquences des pressions mesurées et formées du collecteur d'admission (P_{collecteur d'admission}) est réalisée.

3. Procédé selon la revendication 1 ou 2,
**caractérisé en ce que**
l'excitation pulsée de la soupape d'évacuation d'air de réservoir (30) se produit à des temps d'ouverture courts avec des valeurs de la fréquence et de la durée des cycles pouvant être prédéfinies.

4. Procédé selon l'une quelconque des revendications 1 à 3,
**caractérisé en ce que**
le point de fonctionnement pouvant être prédéfini est sélectionné de manière à être stable dans une plage de limites pouvant être prédéfinies.
